# EUROPÄISCHE PATENTSCHRIFT

(11) **EP 1 507 924 B1**
(45) Veröffentlichungstag und Bekanntmachung des Hinweises auf die Patenterteilung: **29.03.2006**
(21) Anmeldenummer: 03752718.1
(22) Anmeldetag: 30.04.2003
(51) Int. Cl.: D21H 13/50, H01M 4/86, H01M 8/02

(54) **MIKROSTRUKTURIERTES KOHLEFASERPAPIER**
MICROSTRUCTURED CARBON FIBRE PAPER
PAPIER DE FIBRES DE CARBONE A MICROSTRUCTURE

(30) Priorität: 21.05.2002 DE 10222404
(43) Veröffentlichungstag der Anmeldung: 23.02.2005
(73) Patentinhaber: micro steel tools - Gesellschaft für Mikrotechnik GbR, 79104 Freiburg (DE)
(72) Erfinder: MÜLLER, Markus, 79110 Freiburg (DE); MÜLLER, Claas, 79104 Freiburg (DE); FÖRSTER, Ralf, 12623 Berlin (DE)
(74) Vertreter: Müller-Boré & Partner Patentanwälte
(86) Internationale Anmeldenummer: PCT/EP2003/004562
(87) Internationale Veröffentlichungsnummer: WO 2003/097935

(56) Entgegenhaltungen:
- WO-A-00/14816
- WO-A-01/04980
- WO-A-02/22952

## Beschreibung

Die vorliegende Erfindung betrifft ein mikrostrukturiertes Kohlefaserpapier, ein Verfahren zu dessen Herstellung sowie dessen Verwendung als mikrostrukturierte Flow-Field-Diffusionsschicht bzw. Fluidstromverteilerschicht in einer Brennstoffzelle, insbesondere einer Polymer-Elektrolyt-Brennstoffzelle.

Durch die hocheffiziente Energieausbeute bei gleichzeitig geringen Emissionen stellen Brennstoffzellen-Systeme eine vielversprechende Alternative zu den bisherigen Energieumwandlungsverfahren dar. Brennstoffzellen sind elektrochemische Stromerzeuger, die ohne den Umweg über die Wärme, direkt aus einer chemischen Verbindung, Elektrizität erzeugen. Im Zentrum des Interesses steht dabei die Polymer-Elektrolyt-Brennstoffzelle (PEFC), die sich speziell für mobile Anwendungen bei tiefer Betriebstemperatur eignet.

Eine Polymer-Elektrolyt-Brennstoffzelle ist typischerweise aus zwei Elektroden aufgebaut, die durch eine Polymer-Elektrolyt-Membran voneinander getrennt sind, sowie jeweils zwei beidseitig angeordneten Diffusionsschichten und Strömungskanalplatten für die Reaktanden, montiert in einem Gehäuse. Das Herzstück einer Polymer-Elektrolyt-Brennstoffzelle ist dabei die Membran-Elektroden-Einheit (MEA - membrane electrode assembly), die ein Verbund aus einer Polymermembran und den beidseitig darauf aufgebrachten Elektroden ist. Der Anode wird der Brennstoff durch Transport- bzw. Strömungskanäle im Gehäuse der Zelle zugeführt und gelangt durch die Diffusionsschicht fein verteilt an eine auf der Elektrode üblicherweise angeordnete Katalysatorschicht, wie z.B. Platin, Ruthenium oder Rhodium. An der Anode wird der Brennstoff mit Hilfe des Katalysators zu Protonen (H⁺-Ionen), Elektronen (e⁻) und, je nach eingesetztem Brennstoff, Kohlendioxid (CO₂) gespalten. Während die Protonen durch die Polymermembran zur Kathodenseite gelangen, werden die Elektronen durch die Elektrodenschichten an das Gehäuse, üblicherweise ein Graphitgehäuse, abgegeben und über einen elektrischen Verbraucher zur Kathode geleitet. Dort erfolgt üblicherweise ebenfalls katalysiert und unter Aufnahme der Elektronen die Rekombination von Protonen und Sauerstoff zu Wasser. In der Regel werden für die Niedertemperatur-Brennstoffzelle Wasserstoff oder alternativ Methanol als Brennstoff eingesetzt. Die entsprechenden Reaktionsgleichungen lauten dabei:

Wasserstoff-Zelle: H₂ +½ O₂ → H₂O

Direkt-Methanol-Zelle: CH₃OH + 3/2 O₂ → CO₂ + 2 H₂O

Bei einer Wasserstoffzelle werden Wasserstoff und Luft jeweils in die Halbzellen eingeleitet. Die Reaktion findet nur an der Phasengrenze zwischen Katalysator, Reaktionspartnem und der Polymermembran satt. Der anodenseitig zugeführte Wasserstoff wird an der Anode oxidiert und gibt seine Elektronen ab. Die dabei gebildeten Protonen durchdringen die ionenleitfähige Polymermembran hin zur Kathode. Dort setzen sie sich mit Sauerstoffionen zu Wasser um. Der Elektronenübergang erfolgt dabei über einen äußeren Leiterkreis. An der Kathode werden aus Sauerstoffmolekülen O²⁻-lonen gebildet. Das Reaktionswasser wird im Abluftstrom abgeführt.

Die Diffusionsschicht in einer Polymer-Elektrolyt-Brennstoffzelle wird dabei üblicherweise aus Kohlefaserpapier oder Kohlevlies gefertigt. Die Kohlefasern leiten den elektrischen Strom, während die Poren des Materials den Transport der Reaktanden zu den Elektroden ermöglichen. Die Funktion der Diffusionsschicht im Zusammenspiel mit den Strömungskanal-Platten ("flow field plates") innerhalb der Polymer-Elektrolyt-Brennstoffzelle besteht darin, die Membran-Elektroden-Einheit einer Brennstoffzelle mit Reaktanden zu versorgen und die Reaktionsprodukte und elektrischen Strom zum Gehäuse der Brennstoffzelle zu transportieren. Die Strömungskanal-Plätten sind zur Aufnahme und Abgabe eines fluiden Brennstoffs ausgelegt und weisen üblicherweise in einer der planen Außenflächen kontinuierliche Fluidströmungskanäle auf. Zwar sind große Kanalstrukturen im Millimeterbereich erwünscht, derartige Kanalstrukturen resultieren jedoch in einer großen Schichtdicke des Aufbaus. Typische Abmessungen von im Stand der Technik üblicherweise eingesetzten Strömungskanälen und den sie trennenden Stegen liegen im Bereich von etwa 0,5 bis 3 mm, strukturiert in Stahl oder Graphit. Solche Stahl- oder Graphitplatten mit derartig strukturierten Strömungskanälen weisen üblicherweise eine Dicke von bis zu 5 mm auf, um die erforderliche Steifheit für eine gleichmäßige Druckverteilung auf der Diffusionsschicht und damit einen geringen Kontaktwiderstand und die Gasdichtigkeit des Gehäuses zu ermöglichen.

In einer einzelnen Brennstoffzelle werden üblicherweise zwei solche Strömungskanal-Platten, eine Membran mit einer Dicke von etwa 50 bis 200 µm, zwei beidseitig angeordnete Katalysatorschichten mit einer Dicke von jeweils 5 bis 10 µm und zwei beidseitig angeordnete Diffusionsschichten mit einer typischen Dicke von etwa 200 µm eingesetzt. Die Dicke einer einzelnen Zelle addiert sich somit auf etwa 10,5 mm, wobei der kleinste Anteil auf die zentralen Komponenten Membran und Katalysatorschichten entfällt. Zudem bedingt die aufwändige Strukturierung der Strömungskanal-Platten (Flow Fields) in Graphit oder Stahl einen großen Teil der Gesamtproduktionskosten für eine Polymer-Elektrolyt-Brennstoffzelle.

Aus den Dokumenten WO 02/22952, WO 01/04980 und WO 00/14816 sind Kohlefasermaterialien für Brennstoffzellen bekannt.

Somit liegt der vorliegenden Erfindung die Aufgabe zugrunde, ein Material bereitzustellen, das im Rahmen seiner Verwendung in einer Polymer-Elektrolyt-Brennstoffzelle eine optimale Versorgung der Membran-Elektroden-Einheit bei gleichzeitiger Reduzierung der Schichtdicke der Zelle liefern soll.

Diese Aufgabe wird durch die in den Ansprüchen gekennzeichneten Ausführungsformen gelöst.

Insbesondere wird ein Kohlefaserpapier bzw. Kohlenstofffaserpapier mit mikrostrukturierter Oberfläche aus Erhebungen und Vertiefungen auf mindestens einer Oberflächenseite davon bereitgestellt, wobei der Abstand zwischen den Erhebungen im Bereich von 30 µm bis 1500 µm, vorzugsweise 300 µm bis 700 µm, besonders bevorzugt 400 bis 600 µm, und die Höhe der Erhebungen im Bereich von 30 µm bis 1500 µm, vorzugsweise 300 µm bis 700 µm, besonders bevorzugt 400 bis 600 µm liegen.

Gemäß einer Ausführungsform der vorliegenden Erfindung liegen die Erhebungen in der Form von Stegen vor, so daß die Vertiefungen zwischen den Stegen Kanäle bilden. Die Stegbreiten liegen dabei im Bereich von 30 µm bis 1500 um, vorzugsweise 300 µm bis 700 µm, besonders bevorzugt 400 bis 600 µm. Die Form der Stege unterliegt keiner spezifischen Beschränkung. So können die Stege beispielsweise in im wesentlichen rechtwinkliger Form oder auch prismatischer Form ausgebildet sein. Die Kanäle können beispielsweise auch konisch oder sich verjüngend ausgelegt sein. Die Strukturierung bzw. Anordnung der Stege bzw. Kanäle unterliegt keiner spezifischen Beschränkung. So können die Stege kontinuierlich, d.h. ohne Unterbrechungen, verlaufen, so daß die Vertiefungen zwischen den Stegen beispielsweise zueinander parallel verlaufende Kanäle bilden. Alternativ kann die Anordnung dergestalt sein, daß die Stege bereichsweise unterbrochen sind.

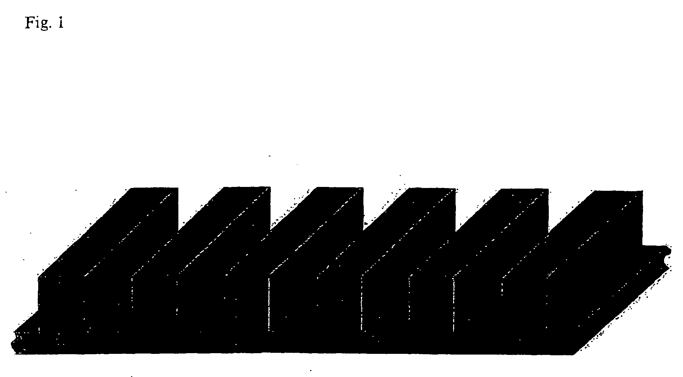

Die Fig. 1 zeigt schematisch ein Beispiel eines erfindungsgemäßen oberflächenstrukturierten Kohlefaserpapiers, welches derart strukturiert ist, daß sich zueinander parallel verlaufende Kanäle bilden, die durch entsprechende Erhebungen bzw. Stege voneinander separiert sind.

Die Gesamtdicke des erfindungsgemäßen Kohlefaserpapiers liegt üblicherweise im Bereich von 100 bis 2000 µm, vorzugsweise 250 bis 1000 µm. Der elektrische spezifische Widerstand des Kohlefaserpapiers liegt vorzugsweise im Bereich von 0,005 bis 0,2 Ωcm, wenn senkrecht zur Ebene gemessen, und im Bereich von 0,0005 bis 0,01 Ωcm, wenn horizontal in der Ebene gemessen. Das erfindungsgemäße Kohlefaserpapier weist im allgemeinen eine Gaspermeabilität im Bereich von 10 bis 100 mmeq/mm, gemessen als Druckdifferenz bei einem Luftstrom von 14 cm/s, geteilt durch die Schichtdicke, auf. Die Biegefestigkeit des erfindungsgemäßen Kohlefaserpapiers liegt üblicherweise im Bereich von 10 bis 70 MPa.

Das mikrostrukturierte Kohlefaserpapier gemäß der vorliegenden Erfindung ist vorzugsweise auf Polyacrylnitril (PAN)-Basis. Derartige Kohlefasem werden durch Pyrolysieren von Polyacrylnitril bei Temperaturen von 1200 bis 1500°C unter Stickstoffatmosphäre erhalten. Üblicherweise werden die Kohlefaser zur Verbesserung der Festigkeit und der Handhabung mit einem Polymerbindemittel versehen. Das Polymermaterial zum Binden der Kohlefaser ist vorzugsweise aus thermoplastischen Harzen, wie Polyvinylalkohol (PVA), Polyvinylacetat, Polyethylenterephthalat (PET), Polypropylen (PP), Polyethylen, Polystyrol, Polyvinylchlorid, Polyvinylidenchlorid, Acrylharzen, Polyurethanen und dergleichen, härtbaren Harzen, wie z.B. Phenolharze, Epoxyharze, Melaminharze, Harnstoffharze, Alkydharze, ungesättigte Polyesterharze und dergleichen, und thermoplastischen Elastomeren, Butadien/Styrol/Copolymeren (SBR), Butadien/Acrylnitril/Co-polymeren (NBR) und dergleichen bzw. einem Gemisch davon ausgewählt. Durch Verwendung eines Fluorpolymers kann dem erfindungsgemäßen Kohlefaserpapier zudem eine wasserbeständige Eigenschaft verliehen werden. Dabei ist es bevorzugt, daß der Gehalt des polymeren Bindemittels, bezogen auf das Gesamtgewicht des Kohlefaserpapiers, in dem Bereich von 2 bis 30 Gew.-% liegt.

Als Ausgangsmaterial für das erfindungsgemäße mikrostrukturierte Kohlefaserpapier kann beispielsweise "TGP-H", vertrieben von Toray Industries, Inc., verwendet werden.

Das erfindungsgemäße Kohlefaserpapier läßt sich in besonders vorteilhafter Weise insbesondere als mikrostrukturierte Flow-Field-Diffusionschicht in einer Polymer-Elektrolyt-Brennstoffzelle einsetzen. Somit betrifft ein weiterer Gegenstand der vorliegenden Erfindung die Verwendung des erfindungsgemäßen Kohlefaserpapiers als mikrostrukturierte Flow-Field-Diffusionschicht bzw. Fluidstromverteilerschicht in einer Brennstoffzelle, insbesondere einer Polymer-Elektrolyt-Brennstoffzelle, die in sich die Funktion der in Brenristoffzellen üblicherweise verwendeten Strömungskanal-Platten und Diffusionsschichten vereint. Durch das erfindungsgemäß mikrostrukturierte Kohlefaserpapier ist es erstmalig möglich, mikrostrukturierte Flow-Field-Diffusionsschichten mit einem Aspektverhältnis von bis zu 1: 10 für Polymermembran-Brennstoffzellen bereitzustellen.

Das erfindungsgemäße mikrostrukturierte Kohlefaserpapier ermöglicht den Ersatz der zwei Funktionseinheiten Strömungskanäle (Flow Fields) und Diffusionsschicht durch eine einzelne mikrostrukturierte Diffusionsschicht. Dadurch kann eine Funktionseinheit eingespart werden, wodurch sich der Brennstoffzellenaufbau vereinfacht, was wiederum eine kostengünstigere Herstellung von Brennstoffzellen zur Folge hat. Ferner wird durch Anwendung des erfindungsgemäßen mikrostrukturierten Kohlefaserpapiers eine wesentlich geringere Schichtdicke der Zelle erreicht, was eine Verringerung des Gewichts der Zellen und eine höhere Energiedichte bewirkt. Zudem wird durch die Verwendung des erfindungsgemäßen Kohlefaserpapiers anstelle metallischer Materialien im Rahmen deren Einsatzes als Strö-mungskanal-Platten Korrosion und damit eine Degradation der Leistung vermieden.

Durch die erfindungsgemäße Mikrostrukturierung des Kohlefaserpapiers unter Ausbildung von Erhebungen bzw. Stegen, die in direktem Kontakt mit dem Membran-Elektroden-Aufbau (MEA) stehen, bietet das erfindungsgemäße Kohlefaserpapier in seiner Funktion als mikrostrukturierte "Flow Fields" gegenüber den herkömmlicherweise als Strömungskanal-Platten verwendeten metallischen Materialien den Vorteil kleinerer elektrischer Kontaktwiderstände, was zur verbesserten Kontaktierung der Membran-Elektroden-Anordnung beiträgt.

Der Einsatz mikrostrukturierter Strömungskanäle, wie durch das erfindungsgemäße Kohlefaserpapier bereitgestellt, verbessert somit unter gleichzeitiger Reduzierung der Schichtdicke einer Zelle die Versorgung der Membran-Elektroden-Einheit im Vergleich zu konventionellen Strömungskanal-Platten in Verbindung mit entsprechenden Diffusionsschichten.

Ein weiterer Gegenstand der vorliegenden Erfindung betrifft ein Verfahren zur Herstellung des erfindungsgemäßen Kohlefaserpapiers, umfassend:
(a) Bereitstellen eines Kohlefaserpapiers und
(b) Anordnen bzw. Erzeugen einer Mikrostruktur aus Erhebungen und Vertiefungen, wobei der Abstand zwischen den Erhebungen im Bereich von 30 bis 1500 µm und die Höhe der Erhebungen im Bereich von 30 bis 1500 µm liegen, auf mindestens einer Oberflächenseite des Kohlefaserpapiers mittels Prägen, Heißpressen, Laminieren, Walzen, Schleifen, Fräsen, elektrochemischer Erosion, funkenerosivem Schneiden oder funkenerosivem Senken.

Unter funkenerosivem Senken wird erfindungsgemäß im Einklang mit der DIN 8580 bzw. der VDI-Richtlinie 3402 ein funkenerosives Bearbeitungsverfahren verstanden, worin die mittlere Relativbewegung zwischen Werkzeugelektrode und Werkstück - im vorliegenden Fall das zu strukturierende Kohlefaserpapier - mit der Vorschubbewegung zusammenfällt. Diese Relativbewegung kann sowohl durch Bewegung der Werkzeugelektrode als auch durch die des Werkstücks erzeugt werden. Außerdem kann dieser Relativbewegung eine Zusatzbewegung überlagert werden. Die Werkzeugelektrode bildet sich dabei unter Aufschlag des Funkenspalts im Werkstück ab.

Unter funkenerosivem Schneiden wird im Rahmen der vorliegenden Erfindung im Einklang mit der DIN 8580 bzw. der VDI-Richtlinie 3402 das Schneiden mit Blatt, Schneiden mit Draht oder Band und Schneiden mit rotierender Scheibe verstanden.

Das in Schritt (a) bereitgestellte Kohlefaserpapier weist dabei vorzugsweise die vorstehend angeführten Eigenschaften, wie insbesondere Dicke, elektrischer spezifischer Widerstand, Gaspermeabilität und Biegefestigkeit, auf. Insbesondere kann ein solches Kohlefaserpapier auf Polyacrylnitril(PAN)-Basis hergestellt sein.

Bislang wurde eine derartige Mikrostrukturierung von Kohlefaserpapier im Stand der Technik nicht ausgeführt, insofern die Mikrostrukturierung von Kohlefaserpapieren die Fertigungstechnik vor einige Probleme stellt. Mit vorwiegend spanenden Fertigungsverfahren können Kohlefaserpapiere nicht oder nur unbefriedigend hinsichtlich der Formgenauigkeit und Kantenschärfe strukturiert werden.

In einer bevorzugten Ausführungsform des erfindungsgemäßen Verfahrens erfolgt das Anordnen der Mikrostruktur mittels funkenerosivem Drahtschneiden (WEDM - Wire-EDM; wire electrodischarge machining) des Kohlefaserpapiers. Mit WEDM ist insbesondere auch die Strukturierung von sehr sprödem Kohlefaserpapier ohne die Beeinflussung des Kohlefaserpapiers durch Prozesskräfte möglich. Zudem kann aufgrund der Prozesskräftefreiheit im Rahmen des WEDM-Behandelns des Kohlefaserpapiers in besonders vorteilhafter Weise eine sehr hohe Abbildegenauigkeit und Kantenschärfe des eingesetzten Materials erzielt werden.

Das Verfahren des funkenerosiven Drahtschneidens (Wire-EDM) macht im allgemein von einer Durchlaufdrahtelektrode Gebrauch, die vorzugsweise einen Durchmesser im Bereich zwischen 3 bis 250 µm aufweist und beispielsweise aus Messing, Stahl, Wolfram, Kupfer oder Kohlefaser besteht. Die Durchlaufdrahtelektrode wird dabei längs einer gegebenen zusammenhängenden Führungsbahn von einer Zuführeinrichtung, z.B. einer Drahtspeichertrommel, zu einer Aufnahmeeinrichtung, z.B. einer Drahtaufnahmetrommel, durch ein in einer vorbestimmten Zeitzone angeordnetes Werkstück gefördert. Ein Paar von Drahtführungskörpem ist üblicherweise zu beiden Seiten des Werkstücks angeordnet, um in der Schneidzone eine geradlinige Bahn dazwischen zu bilden und so ausgelegt, daß die Drahtelektrode genau das Werkstück durchläuft.

Der Schneidspalt wird mit einem Schneidfluid gespült und mit einem elektrischen Strom hoher Stromdichte gespeist, der zwischen der Drahtelektrode und dem Werkstück fließt, um funkenerosiv vom Werkstück Material abzutragen. Üblicherweise ist das Schneidfluid destilliertes Wasser oder irgendein dielektrisches Medium. Der funkenerosive Arbeitsstrom weist die Form einer Folge elektrischer Impulse auf, die zu einer Wiederholung von zeitlich beabstandeten, einzelnen örtlichen elektrischen Entladungen durch den Arbeitsspalt führt. Jede einzelne, auf eine beliebige örtliche Teilfläche auf der Werkstückoberfläche auftreffende elektrische Entladung wirkt unter impulsmäßigem Schmelzen und Verdampfen von Material, das impulsmäßig von dieser Teilfläche unter die elektrische Entladung begleitendem hohen Druck entfernt wird. Bei der aufeinanderfolgenden Zuführung von Arbeitsimpulsen durch den Spalt werden die elektrischen Entladungen wiederholt, jedoch an wechselnden örtlichen Teilflächen erzeugt, wodurch kumulativ Material vom Werkstück abgetragen wird. Während die funkenerosive Materialabtragung fortschreitet, wird das Werkstück relativ zur erwähnten geradlinigen Bahn quer dazu bewegt. Dies ermöglicht, daß die durch das Werkstück geführte Drahtelektrode quer zum Werkstück vorrückt und folglich ein Schneidspalt hinter der vorrückenden Drahtelektrode gebildet wird. Die fortgesetzte Relativbewegung längs einer vorgeschriebenen Bahn führt zur Bildung eines dieser entsprechenden und durch diesen Schneidspalt im Werkzeug definierten gewünschten Profils.

Die erfindungsgemäße Bearbeitung von Kohlefaserpapier zu dessen Mikrostrukturierung mittels funkenerosivem Drahtschneiden führt zu einer ausgezeichneten Kantenschärfe und Abbildegenauigkeit dieses Materials. Dadurch können sogar Erhebungen und Vertiefungen bzw. Kanal- und Stegbreiten im Bereich von 30 µm gefertigt werden, sofern entsprechende Drähte und Schnitttechnologien eingesetzt werden.

Die Fig. 1 zeigt ein mittels WEDM mikrostrukturiertes Kohlefaserpapier, das sich zum Einsatz in einer Brennstoffzelle eignet. Dabei wurde ein herkömmliches, im Handel erhältliches Kohlefaserpapier (TGP-H von Toray Industries, Inc.) von ca. 700 µm Dicke mittels WEDM derart strukturiert, daß parallele Kanäle mit einer Tiefe von ca. 500 µm und einer Breite von ca. 400 µm gebildet wurden. Die Stege zwischen den Kanälen weisen ein Breite von ca. 400 µm auf. Die Gesamtfläche dieser Strukturen kann in einem weiten Bereich gewählt werden.

In einer anderen Ausführungsform des erfindungsgemäßen Verfahren erfolgt das Anordnen der Mikrostruktur mittels thermischem Prägen des Kohlefaserpapiers mit einem Prägewerkzeug, welches an dessen Oberfläche Vorsprünge aufweist, so daß die Vertiefungen an den Stellen erzeugt werden, welche mit den an der Oberfläche des Prägewerkzeugs angeordneten Vorsprüngen in Kontakt kommen. Die Oberflächentemperatur des Prägewerkzeugs, welches das Negativ der gewünschten Oberflächenmikrostruktur aufweist, liegt dabei im allgemeinen über der Zersetzungstemperatur des Kohlefaserpapiers. Die Größe der an der Oberfläche des Prägewerkzeugs angeordneten Vorsprünge beträgt dementsprechend 30 µm bis 1500 µm, vorzugsweise 300 µm bis 700 µm, besonders bevorzugt 400 bis 600 µm.

## Patentansprüche

1. Kohlefaserpapier mit mikrostrukturierter Oberfläche aus Erhebungen und Vertiefungen auf mindestens einer Oberflächenseite davon, wobei der Abstand zwischen den Erhebungen im Bereich von 30 µm bis 1500 µm und die Höhe der Erhebungen im Bereich von 30 µm bis 1500 µm liegen.

2. Kohlefaserpapier nach Anspruch 1, wobei die Erhebungen in der Form von Stegen vorliegen, so daß die Vertiefungen zwischen den Stegen Kanäle bilden.

3. Kohlefaserpapier nach Anspruch 1 oder 2, wobei die Gesamtdicke des Kohlefaserpapiers im Bereich von 100 µm bis 2000 µm liegt.

4. Kohlefaserpapier nach einem der Ansprüche 1 bis 3, wobei der elektrische spezifische Widerstand des Kohlefaserpapiers im Bereich von 0,005 bis 0,2 Ωcm, wenn senkrecht zur Ebene gemessen, und im Bereich von 0,0005 bis 0,01 Ωcm, wenn horizontal in der Ebene gemessen, liegt.

5. Kohlefaserpapier nach einem der Ansprüche 1 bis 4, wobei die Gaspermeabilität des Kohlefaserpapiers im Bereich von 10 bis 100 mmeq/mm liegt.

6. Kohlefaserpapier nach einem der Ansprüche 1 bis 5, wobei das Kohlefaserpapier eine Biegefestigkeit im Bereich von 10 bis 70 MPa aufweist.

7. Kohlefaserpapier nach einem der Ansprüche 1 bis 6, wobei das Kohlefaserpapier auf PAN-Basis ist.

8. Verfahren zur Herstellung des Kohlefaserpapiers nach einem der Ansprüche 1 bis 7, umfassend:
(a) Bereitstellen eines Kohlefaserpapiers und
(b) Anordnen einer Mikrostruktur aus Erhebungen und Vertiefungen, wobei der Abstand zwischen den Erhebungen im Bereich von 30 bis 1500 µm und die Höhe der Erhebungen im Bereich von 30 bis 1500 µm liegen, auf mindestens einer Oberflächenseite des Kohlefaserpapiers mittels Prägen, Heißpressen, Laminieren, Walzen, Schleifen, Fräsen, elektrochemischer Erosion, funkenerosivem Schneiden oder funkenerosivem Senken.

9. Verfahren nach Anspruch 8, wobei das Anordnen der Mikrostruktur mittels funkenerosivem Drahtschneiden des Kohlefaserpapiers erfolgt, wobei der verwendete Drahtdurchmesser 3 bis 250 µm beträgt.

10. Verfahren nach Anspruch 8, wobei das Anordnen der Mikrostruktur mittels thermischem Prägen des Kohlefaserpapiers mit einem Prägewerkzeug erfolgt, welches an dessen Oberfläche Vorsprünge aufweist, so daß die Vertiefungen an den Stellen erzeugt werden, welche mit den an der Oberfläche des Prägewerkzeugs angeordneten Vorsprüngen in Kontakt kommen.

11. Verfahren nach Anspruch 10, wobei die Oberflächentemperatur des Prägewerkzeugs über der Zersetzungstemperatur des Kohlefaserpapiers liegt.

12. Verfahren nach einem der Ansprüche 8, 10 oder 11, wobei die Größe der an der Oberfläche des Prägewerkzeugs angeordneten Vorsprünge 30 µm bis 1500 µm beträgt.

13. Verwendung des Kohlefaserpapiers nach einem der Ansprüche 1 bis 7 als mikrostrukturierte Flow-Field-Diffusionsschicht in einer Brennstoffzelle, insbesondere einer Polymer-Elektrolyt-Brennstoffzelle.

14. Brennstoffzelle, umfassend mindestens eine Membran-Elektroden-Einheit, wobei die Membran-Elektroden-Einheit auf beiden Elektrodenseiten jeweils in Kontakt mit einem mikrostrukturierten Kohlefaserpapier gemäß einem der Ansprüche 1 bis 7 als Flow-Field-Diffusionsschicht steht.

15. Brennstoffzelle nach 14, welche eine Niedertemperatur-Wasserstoffzelle ist.

## Claims

1. Carbon fibre paper having a microstructured surface comprising raised regions and depressions on at least one side, wherein the distance between the raised regions is in the range from 30 µm to 1500 µm and the height of the raised regions is in the range from 30 µm to 1500 µm.

2. Carbon fibre paper according to Claim 1, wherein the raised regions are in the form of ridges so that the depressions form channels between the ridges.

3. Carbon fibre paper according to Claim 1 or 2, wherein the total thickness of the carbon fibre paper is in the range from 100 µm to 2000 µm.

4. Carbon fibre paper according to any of Claims 1 to 3, wherein the specific electrical resistance of the carbon fibre paper is in the range from 0.005 to 0.2 Ωcm when measured perpendicular to the plane and is in the range from 0.0005 to 0.01 Ωcm when measured horizontally in the plane.

5. Carbon fibre paper according to any of Claims 1 to 4, wherein the gas permeability of the carbon fibre paper is in the range from 10 to 100 mmeq/mm.

6. Carbon fibre paper according to any of Claims 1 to 5, wherein the carbon fibre paper has a flexural strength in the range from 10 to 70 MPa.

7. Carbon fibre paper according to any of Claims 1 to 6, wherein the carbon fibre paper is based on PAN.

8. Process for producing the carbon fibre paper according to any of Claims 1 to 7, which comprises:
(a) provision of a carbon fibre paper and
(b) formation of a microstructure comprising raised regions and depressions, with the distance between the raised regions being in the range from 30 to 1500 µm and the height of the raised regions being in the range from 30 to 1500 µm, on at least one side of the carbon fibre paper by means of embossing, hot pressing, lamination, rolling, grinding, milling, electrochemical erosion, electrodischarge machining or spark-erosive cavity sinking.

9. Process according to Claim 8, wherein the formation of the microstructure is carried out by means of wire electrodischarge machining of the carbon fibre paper, with the wire diameter used being from 3 to 250 µm.

10. Process according to Claim 8, wherein the formation of the microstructure is carried out by means of thermal embossing of the carbon fibre paper by means of an embossing tool which has projections on its surface which produce the depressions at the points which come into contact with the projections located on the surface of the embossing tool.

11. Process according to Claim 10, wherein the surface temperature of the embossing tool is above the decomposition temperature of the carbon fibre paper.

12. Process according to any of Claims 8, 10 and 11, wherein the size of the projections located on the surface of the embossing tool is from 30 µm to 1500 µm.

13. Use of the carbon fibre paper according to any of Claims 1 to 7 as microstructured flow field diffusion layer in a fuel cell, in particular a polymer electrolyte fuel cell.

14. Fuel cell comprising at least one membrane-electrode assembly, wherein the membrane-electrode assembly is in contact on each electrode side with a microstructured carbon fibre paper according to any of Claims 1 to 7 as flow field diffusion layer.

15. Fuel cell according to Claim 14 which is a low-temperature hydrogen cell.

## Revendications

1. Papier de fibres de carbone à surface microstructurée constituée de crêtes et de creux sur au moins une face, avec un intervalle entre les crêtes compris entre 30 µm et 1500 µm, et avec une hauteur des crêtes entre 30 µm et 1500 µm.

2. Papier de fibres de carbone selon la revendication 1, où les crêtes sont présentes sous forme de barres, de sorte que les creux entre les crêtes forment des canaux.

3. Papier de fibres de carbone selon la revendication 1 ou 2, où l'épaisseur totale du papier de fibres de carbone est comprise entre 100 µm et 2000 µm.

4. Papier de fibres de carbone selon une des revendications 1 à 3, où la résistance électrique spécifique du papier de fibres de carbone est comprise entre 0,005 et 0,2 Ω/cm quand on la mesure perpendiculairement au plan de la feuille, et entre 0,0005 et 0,01 Ω/cm quand on la mesure horizontalement dans le plan de la feuille.

5. Papier de fibres de carbone selon une des revendications 1 à 4, où la perméabilité aux gaz du papier de fibres de carbone est comprise entre 10 et 100 mmeq/mm.

6. Papier de fibres de carbone selon une des revendications 1 à 5, où le papier de fibres de carbone présente une résistance à la flexion entre 10 et 70 MPa.

7. Papier de fibres de carbone selon une des revendications 1 à 6, où le papier de fibres de carbone est à base de polyacrylonitrile (PAN).

8. Procédé de fabrication du papier de fibres de carbone selon une des revendications 1 à 7, comprenant :
(a) la préparation d'un papier de fibres de carbone et
(b) la mise en place d'une microstructure constituée de crêtes et de creux où l'intervalle entre les crêtes est compris entre 30 µm et 1500 µm et la hauteur des crêtes est comprise entre 30 µm et 1500 µm, sur au moins une des faces, par estampage, pressage à chaud, laminage, passage au rouleau, arasement, fraisage, érosion électrochimique, découpe par étincelage ou par enfonçage électroérosif.

9. Procédé selon la revendication 8 où la mise en place de la microstructure s'effectue par découpage à fil par étincelage du papier de fibres de carbone, avec un diamètre de fil entre 3 et 250 µm.

10. Procédé selon la revendication 8 où la mise en place de la microstructure s'effectue par estampage thermique du papier de fibres de carbone avec un outillage de frappe, qui présente sur sa surface des parties saillantes telles que les creux sont créés aux endroits qui entrent en contact avec les saillies disposées à la surface de l'outil de frappe.

11. Procédé selon la revendication 10 où la température de surface de l'outillage de frappe est supérieure à la température de décomposition du papier de fibres de carbone.

12. Procédé selon une des revendications 8, 10 ou 11, où la taille des saillies disposées à la surface de l'outillage de frappe est comprise entre 30 et 1500 µm.

13. Utilisation du papier de fibres de carbone selon une des revendications 1 à 7 comme couche microstructurée de diffusion à champ d'écoulement dans une pile à combustible, en particulier une pile à combustible polymère-électrolyte.

14. Pile à combustible comprenant au minimum une unité membrane-électrodes, où l'unité membrane-électrodes est en contact au niveau respectivement des deux électrodes avec un papier de fibres de carbone microstructuré selon une des revendications 1 à 7 comme couche de diffusion à champ d'écoulement.

15. Pile à combustible selon la revendication 14 qui constitue une pile à hydrogène à basse température.
